# EUROPEAN PATENT APPLICATION

(11) **EP 2 204 915 A1**
(43) Date of publication of application: **07.07.2010**
(21) Application number: 09180639.8
(22) Date of filing: 23.12.2009
(51) Int. Cl.: H04B 1/707

(54) **Rake receiver**

(30) Priority: 05.01.2009 GB 0900054
(71) Applicant: Picochip Designs Limited, Bath BA1 5BG (GB)
(72) Inventor: Muirhead, David Stuart, Cheltenham,, Gloucestershire, GL51 6BE (GB)
(74) Representative: Chamberlain, Alan James

(57) **Abstract**

There is provided a rake receiver for a femtocell base station, the rake receiver being for use in receiving a multipath signal, the rake receiver comprising a plurality of fingers, and wherein the rake receiver is adapted to assign multiple fingers to the same path in the multipath signal.

## Description

### Technical Field of the Invention

The invention relates to a receiver primarily for use in a femtocell base station, and in particular relates to a rake receiver for use in receiving a multipath signal.

### Background to the Invention

Femtocells are small, low-power, indoor cellular base stations designed for residential or business deployment. They provide better network coverage and capacity than that available in such environments from the overlying macrocellular network. In addition, femtocells use a broadband connection to receive data from and send data back to the operator's network (known as "backhaul").

As the coverage area of the femtocell base station is quite small, conventional signal equalisation techniques that are used to overcome channel impairments may not be required.

In micro and macro cellular systems where a signal can take multiple paths from the transmitter to the receiver (known as a multipath signal), rake receivers are used to increase the multipath diversity which can increase the capacity in a noise limited system.

A conventional rake receiver has a number of fingers that are each assigned to a different path in the multipath signal. Each path feeds a maximum ratio combiner where delay and phase equalisation is performed. All of the fingers are coherently combined to produce a composite sum of all the multipath components, thus compensating for the effects of multipath propagation.

The paths are identified by performing a coarse timing search, which generates timing peaks corresponding to the multipath delay, usually providing an accuracy of ±1/4 chip or better.

Before equalisation, the coarsely timed rake fingers are usually subject to fine time correction using a fine finger tracker which tries to identify the optimal sampling point for the received multipaths. In addition, fine finger tracker systems combat the effects of timing drift caused by instantaneous movement of the mobile device or user equipment (UE).

### Summary of the Invention

It has been recognised that in a femtocell, where the radius of the cell is small, the number of possible multipaths will be small, and so the number of rake fingers required to cover cell will be small.

In addition, the movement of any mobile devices or UEs in the femtocell will be relatively low (in comparison to a micro or macro cell) as the users in the cell are likely to be on foot, rather than in a vehicle. For this reason, a fine finger tracker is not necessarily required to correct for instantaneous movement. However, without fine finger tracking, there will be a sampling error from the coarse timing search.

To overcome this, multiple rake fingers can be assigned to the same path. In particular, additional rake fingers can be assigned to the rake receiver at a granularity of less than 1 chip. This provides additional energy for fingers that are sub-optimally sampled.

Assigning multiple rake fingers to the same path is feasible because the total number of fingers required for the femtocell is small (due to the relatively small number of multipaths), so the use of additional fractional fingers for a path does not cause a severe impact on the required processing complexity.

There is therefore provided a rake receiver for a femtocell base station for use in receiving a multipath signal, the rake receiver having a plurality of fingers, wherein the rake receiver is adapted to assign multiple fingers to the same path in the multipath signal.

Preferably, the rake receiver further comprises a coarse timing searcher that is adapted to identify the paths in the received multipath signal.

Preferably, the coarse timing searcher identifies the paths by detecting signal peaks in the received multipath signal.

Preferably, the coarse timing searcher detects two signal peaks per path from the data samples in the received multipath signal in the event that the multipath signal is sub-optimally sampled.

Preferably, the rake receiver is adapted to assign a finger to each of the detected signal peaks for at least one of the identified paths.

Preferably, the rake receiver further comprises a control block for receiving an output from the coarse timing searcher indicating the detected paths and for controlling the assignment of fingers to the detected paths.

Preferably, the output of each of the fingers is combined to produce a composite signal.

Preferably, each finger is adapted to perform delay and phase equalisation on the path assigned thereto.

In preferred embodiments, the rake receiver is for use in a 3GPP UMTS communication network.

Further aspects of the invention provide a femtocell base station comprising a rake receiver as described above.

Yet another aspect of the invention provides a user equipment comprising a rake receiver for use in receiving a multipath signal, the rake receiver comprising a plurality of fingers, and wherein the rake receiver is adapted to assign multiple fingers to the same path in the multipath signal when the user equipment is communicating with a femtocell base station.

### Brief Description of the Drawings

The invention will now be described, by way of example only, with reference to the following drawings, in which:
Figure 1 is a diagram illustrating a femtocell base station in a multipath environment;
Figure 2 is a block diagram of a rake receiver;
Figure 3 is a block diagram of a rake receiver for a femtocell base station in accordance with an aspect of the invention; and
Figure 4 is a set of tables illustrating the improvement in performance obtained by a rake receiver in accordance with the invention.

### Detailed Description of the Preferred Embodiments

Although the invention will be described primarily with reference to a femtocell device for a 3GPP UMTS communications network, it will be appreciated that the invention is applicable to any type of second, third or subsequent generation cellular communication network in which femtocell base stations are used in a multipath environment where a rake receiver would normally be used. In other types of network, femtocell base stations can be known as home base stations, access point base stations or 3G access points.

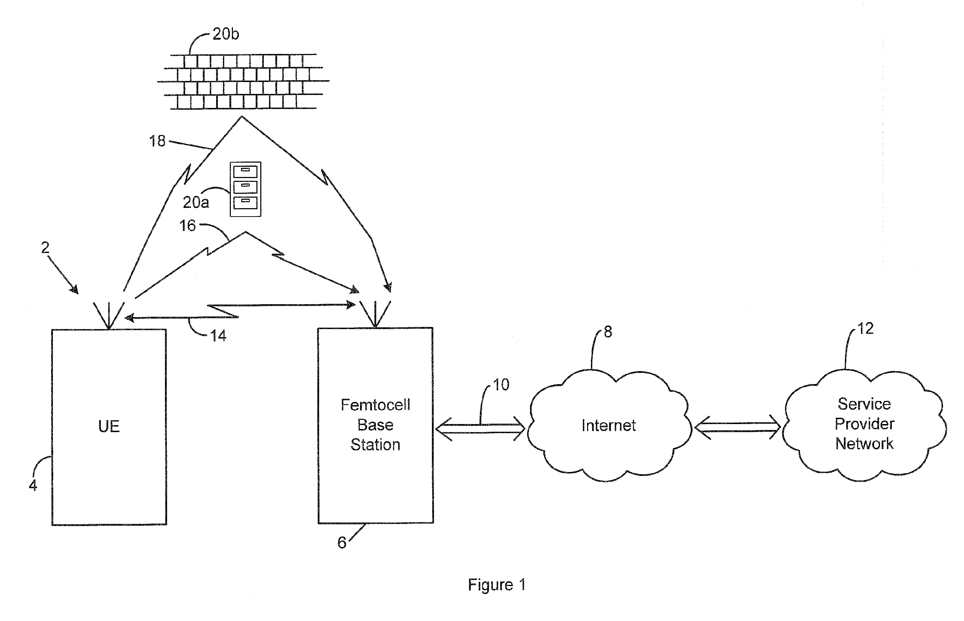

Figure 1 shows a network 2 in accordance with the invention. The network 2 comprises a mobile terminal (referred to below as user equipment) 4 that can communicate wirelessly with a femtocell base station 6. The femtocell device 6 is connected to the Internet 8 via a broadband or similar type connection 10, which it uses to access the service provider network 12.

Although a single user equipment 4 is shown in Figure 1, it will be appreciated that a femtocell base station 6 can typically handle communications with several user equipments 4 at any given time.

As shown, the user equipment 4 and femtocell base station 6 are in an environment in which signals transmitted from the user equipment 4 can take multiple paths to the femtocell base station 6. Thus, in this example, in addition to the direct path 14, the signals can take indirect paths 16, 18 by reflecting off of objects 20a and 20b that are in the vicinity of the user equipment 4 and femtocell base station 6. Thus, the femtocell base station 6 receives a multipath signal.

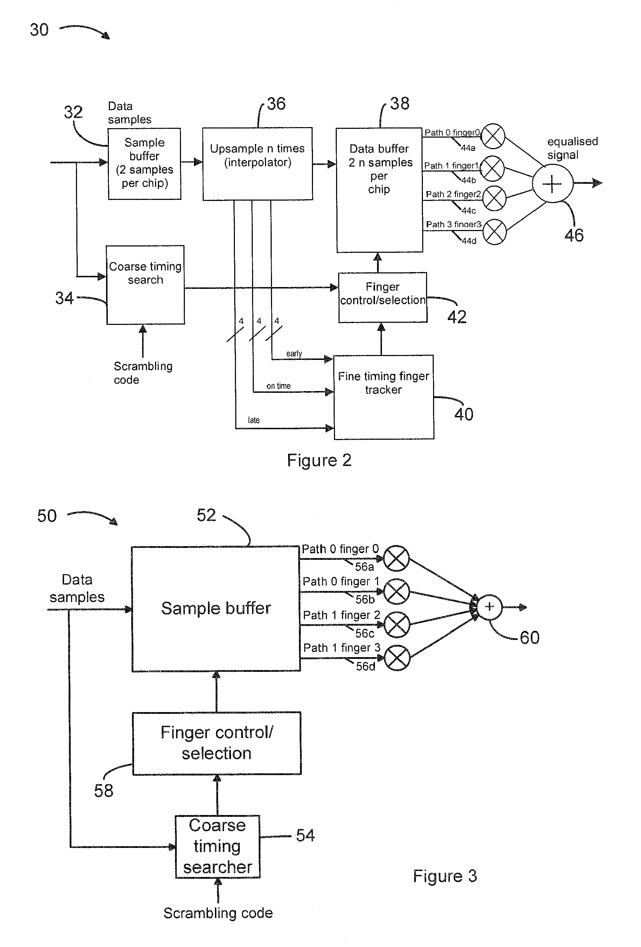

A rake receiver that is used to receive this multipath signal is shown in Figure 2. The rake receiver 30 comprises a number of fingers that are each assigned to a different multipath signal. The incoming data samples (comprising the signals from the different paths), typically at a minimum two times the chip rate, are stored in a sample buffer 32 and also provided to a coarse timing searcher 34.

The coarse timing searcher 34 receives the scrambling code and correlates the incoming data samples and the scrambling code to determine a coarse timing accuracy (i.e. the peaks in the received signal are detected). Depending on the radio environment there typically could be up to four distinct, at least 1 chip apart, multipaths detected. Of course, the number of paths detected will be determined by the radio environment and the cell radius. The greater the cell radius, the more likely there will be a need to assign more distinct fingers to equalise the signal correctly.

Each one of the identified paths is assigned to a corresponding rake finger in the rake receiver 30. To ensure that each of the rake fingers has the optimal sampling point, the data samples are upsampled 'n' times using an interpolator 36 and are stored in a further buffer 38.

The upsampled data is also provided to a fine timing finger tracker 40 which determines a more accurate sampling point for each of the paths identified in the received signal. The details of the fine timing finger tracker 40 are known in the art, and it suffices to say that the tracker 40 makes a decision on whether to adjust the sampling point of the finger based on a comparison of the currently selected 'on-time' finger and the two immediately adjacent coarse sampling points - 'early' and 'late'.

The output from the coarse timing searcher 34 and the fine timing finger tracker 40 are provided to a finger control/selection block 42 which controls the buffer 38 to assign the relevant paths to the appropriate fingers 44a, 44b, 44c and 44d (i.e. path 0, path 1, path 2 and path 3 respectively). The fingers 44 each feed a respective maximum ratio combiner where delay and phase equalisation is performed.

The resulting multipath components are combined in adder 46 to produce a composite signal.

However, as described above, it has been recognised that in a femtocell the number of possible multipaths is likely to be small, and so the number of rake fingers required to cover cell will be small. Also, as the movement of any user equipments 4 in the femtocell will be relatively low (in comparison to a micro or macro cell), a fine finger tracker is not necessarily required to correct for instantaneous movement.

Therefore, to overcome the sampling error from the coarse timing search (that would be overcome by the fine finger tracking in the rake receiver of Figure 2), multiple rake fingers can be assigned to the same path.

This results in a rake receiver that is much simpler than that required for micro or macro cell base stations.

A rake receiver 50 for a femtocell base station in accordance with the invention is shown in Figure 3. As in the rake receiver above, the incoming data samples (comprising the signals from the different paths), typically at a minimum two times the chip rate, are stored in a sample buffer 52 and also provided to a coarse timing searcher 54.

The coarse timing searcher 54 receives the scrambling code and correlates the incoming data samples and the scrambling code to determine a coarse timing accuracy (i.e. the peaks in the received signal are detected). As before, depending on the radio environment, there typically could be up to four distinct, at least 1 chip apart, multipaths detected.

Each one of the identified paths is assigned to a corresponding rake finger 56a, 56b, 56c or 56d in the rake receiver 50 by a finger control/selection block 58 that receives the output from the coarse timing searcher 54.

However, in accordance with an aspect of the invention, as there are likely to be few multipaths in the signal received at the femtocell base station 6, (which means not all of the available fingers 56 will be assigned to a respective path), multiple fingers 56 are assigned to the same path. For example, in Figure 3, fingers 56a and 56b are assigned to path 0 and fingers 56c and 56d are assigned to path 1.

In a preferred embodiment, rather than assigning the fingers 56 as distinct, one-chip-apart multipaths, the fingers 56 are assigned based on the timing peaks from the coarse timing search. Since there are likely to be two detected peaks per path (due to the sampling), both of these will be assigned to fingers 56, provided that there are sufficient fingers 56 available.

The fingers 56 each feed a respective maximum ratio combiner where delay and phase equalisation is performed, and the resulting multipath components are combined in adder 60 to produce a composite signal.

Thus, this rake receiver 50 compensates for timing error resulting from the coarse timing search by assigning fingers at a sub-chip (i.e. less than 1 chip) accuracy. This provides the advantages that a complex fine timing finger tracker is not required, the finger control/selection block 42 can be simplified, and also that the receiver is more resilient to timing jitter (where adjacent peaks may otherwise cause the finger control/selection block to continually set up and delete fingers in line with the jitter).

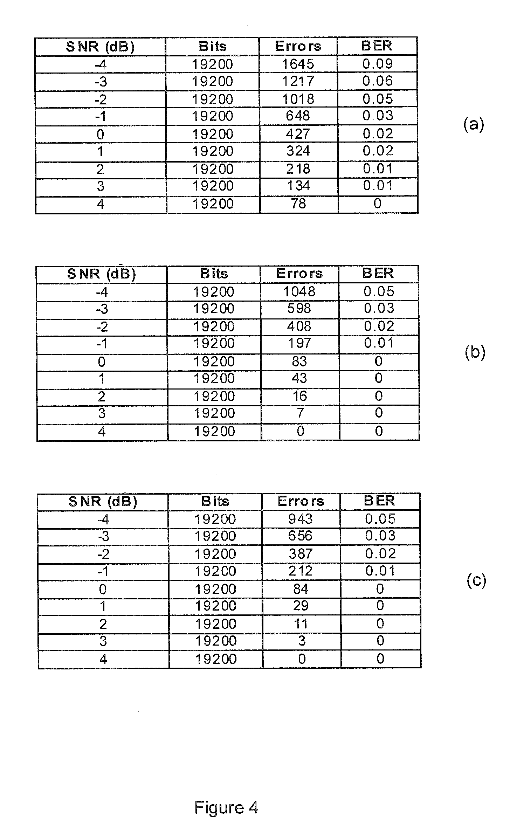

The tables in Figure 4 show the improvement in performance between the multiple finger assignment according to the invention and a single finger assignment. The performance in terms of the bit error ratio (BER) is given for a single path that is subject to additive white Gaussian noise (AWGN), with Figure 4(a) showing the bit error ratio when a single finger is assigned to the path (without a fine finger tracker) and is subject to a ¼ chip timing error; Figure 4(b) showing the bit error ratio when two fingers, separated by ½ chip are assigned to the same path (i.e. with a ¼ chip timing error); and Figure 4(c) showing the bit error ratio for an optimally sampled signal (i.e. the timing offset of the path is 0 chips).

Thus, it can be seen that the performance improves significantly when two fingers are assigned to a path (Figure 4(b)) compared to the single finger (Figure 4(a)), and almost approaches the optimal performance shown in Figure 4(c).

Therefore, there is provided a rake receiver for a femtocell base station that is robust to sampling error and provides an improved performance with a relatively low level of complexity.

It will be appreciated that as a user equipment 4 is mobile, it is not desirable to provide it solely with a rake receiver as shown in Figure 3, as the user equipment 4 must be able to operate in environments where the number of multipaths is not small (as in microcells and macrocells).

However, in accordance with an aspect of the invention, a user equipment 4 can be provided with a rake receiver as shown in Figure 2 that can be dynamically configured to operate as a rake receiver as shown in Figure 3. Thus, the rake receiver in Figure 2 can be provided with a further control unit that is able to configure the rake receiver so that, when the user equipment 4 is communicating with a femtocell base station 6, the coarse timing searcher 34, interpolator 36, data buffer 38 and fine timing finger tracker 40 in the rake receiver are switched off or switched out of the signalling path. When the user equipment 4 communicates with a microcell or macrocell, the control unit can configure the rake receiver so that the coarse timing searcher 34, interpolator 36, data buffer 38 and fine timing finger tracker 40 in the rake receiver are switched on, or switched back into the signalling path.

In this way, the power consumption of the rake receiver in the user equipment 4 can be reduced when the user equipment 4 is communicating with a femtocell base station 6.

Variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A rake receiver for a femtocell base station, the rake receiver being for use in receiving a multipath signal, the rake receiver comprising a plurality of fingers, and wherein the rake receiver is adapted to assign multiple fingers to the same path in the multipath signal.

2. A rake receiver as claimed in claim 1, further comprising a coarse timing searcher that is adapted to identify the paths in the received multipath signal.

3. A rake receiver as claimed in claim 2, wherein the coarse timing searcher identifies the paths by detecting signal peaks in the received multipath signal.

4. A rake receiver as claimed in claim 3, wherein the coarse timing searcher detects two signal peaks per path from the data samples in the received multipath signal in the event that the multipath signal is sub-optimally sampled.

5. A rake receiver as claimed in claim 4, wherein the rake receiver is adapted to assign a finger to each of the detected signal peaks for at least one of the identified paths.

6. A rake receiver as claimed in claim 5, further comprising a control block for receiving an output from the coarse timing searcher indicating the detected paths and for controlling the assignment of fingers to the detected paths.

7. A rake receiver as claimed in any preceding claim, wherein the output of each of the fingers is combined to produce a composite signal.

8. A rake receiver as claimed in any preceding claim, wherein each finger is adapted to perform delay and phase equalisation on the path assigned thereto.

9. A rake receiver as claimed in any preceding claim, wherein the rake receiver is for use in a 3GPP UMTS communication network.

10. A femtocell base station comprising a rake receiver as claimed in any of claims 1 to 9.

11. A user equipment comprising a rake receiver for use in receiving a multipath signal, the rake receiver comprising a plurality of fingers, and wherein the rake receiver is adapted to assign multiple fingers to the same path in the multipath signal when the user equipment is communicating with a femtocell base station.

12. A user equipment as claimed in claim 11, wherein the rake receiver is adapted to assign a single finger to each path in the multipath signal when the user equipment is communicating with a microcell or macrocell base station.
